# EUROPEAN PATENT APPLICATION

(11) **EP 4 588 858 A1**
(43) Date of publication of application: **23.07.2025**
(21) Application number: 23865160.8
(22) Date of filing: 14.08.2023
(51) Int. Cl.: B65G 1/137, B65G 47/90

(54) **INFORMATION PROCESSING METHOD, INFORMATION PROCESSING DEVICE, AND SYSTEM**

(30) Priority: 12.09.2022 JP 2022144588
(71) Applicant: Kabushiki Kaisha Toshiba, Tokyo 105-0023 (JP); TOSHIBA INFRASTRUCTURE SYSTEMS & SOLUTIONS CORPORATION, Saiwai-ku Kawasaki-shi Kanagawa 212-0013 (JP)
(72) Inventor: KOJIMA, Hidetaka, Kawasaki-shi, Kanagawa 212-0013 (JP); AKAGI, Takuma, Kawasaki-shi, Kanagawa 212-0013 (JP)
(74) Representative: HKW Intellectual Property PartG mbB
(86) International application number: PCT/JP2023/029408
(87) International publication number: WO 2024/057801

(57) **Abstract**

An information processing method, an information processing device and a system capable of effectively picking articles are provided.

According to an embodiment, an information processing method executed by a processor includes transferring a storage case which stores an article to a robot station where the article is picked by a robot, causing the robot to pick the article from the storage case and put the article into a dispensing case, transferring the dispensing case to a human station where an operator picks the article, transferring the storage case to the human station, and causing the operator to pick the article from the storage case and put the article into the dispensing case.

## Description

### FIELD

Embodiments described herein relate generally to an information processing method, an information processing device and a system

### BACKGROUND

In recent years, a system for transferring a storage tray that stores articles to a station using an automated transfer device. In the station, an operator or a robot picks an article from the storage tray transferred by the automated transfer device and puts it into a dispensing case.

In the system, if articles that can and cannot be picked by a robot are put into the same dispensing case, the dispensing case may be set in a station equipped with the robot. In this case, the system needs to call an operator to the station in order to put the article, which cannot be picked by the robot, into the dispensing case. As a result, the system has a problem of decreasing in throughput.

### CITATION LIST

### PATENT LITERATURE

1. Jpn. Pat. Appln. KOKAI Publication No. 2022-100437

### SUMMARY

### TECHNICAL PROBLEM

To solve the above problem, an information processing method, an information processing device and a system capable of effectively picking articles are provided.

### SOLUTION TO PROBLEM

According to an embodiment, an information processing method executed by a processor includes transferring a storage case which stores an article to a robot station where the article is picked by a robot, causing the robot to pick the article from the storage case and put the article into a dispensing case, transferring the dispensing case to a human station where an operator picks the article, transferring the storage case to the human station, and causing the operator to pick the article from the storage case and put the article into the dispensing case.

### BRIEF DESCRIPTION OF THE DRAWINGS

FIG. 1 is a diagram schematically showing a configuration example of a picking system according to an embodiment.
FIG. 2 is a block diagram showing a configuration example of the picking system according to the embodiment.
FIG. 3 is a block diagram showing a configuration example of a WES according to the embodiment.
FIG. 4 is a side view of a CTU according to the embodiment.
FIG. 5 is a block diagram showing a configuration example of the CTU according to the embodiment.
FIG. 6 is a diagram showing an example of a picking availability database according to the embodiment.
FIG. 7 is a diagram showing an example of a picking list according to the embodiment.
FIG. 8 is a diagram showing an operation example of the WES according to the embodiment.
FIG. 9 is a diagram showing an operation example of the WES according to the embodiment.
FIG. 10 is a diagram showing an operation example of the WES according to the embodiment.
FIG. 11 is a diagram showing an operation example of the picking system according to the embodiment.
FIG. 12 is a diagram showing an operation example of the picking system according to the embodiment.
FIG. 13 is a diagram showing an operation example of the picking system according to the embodiment.
FIG. 14 is a diagram showing an operation example of the picking system according to the embodiment.
FIG. 15 is a flowchart showing an operation example of the WES according to the embodiment.
FIG. 16 is sequence chart showing an operation example of the picking system according to the embodiment.
FIG. 17 is a diagram schematically showing another configuration example of the picking system according to the embodiment.
FIG. 18 is a diagram schematically showing still another configuration example of the picking system according to the embodiment.

### DETAILED DESCRIPTION

An embodiment will be described below with reference to the drawings.

The picking system according to the embodiment picks an article from a tray (storage tray) which stores articles in a logistics system or the like. The storage tray is stored on a shelf. The picking system transfers the storage tray from the shelf to a picking station using a case transfer robot (CTU). In the picking station, the picking system picks an article from the storage tray and puts it into a dispensing case. The picking system causes an operator or a robot to pick the article from the storage tray and put it in the dispensing case.

For example, the picking system is used in a logistics center, a warehouse or the like.

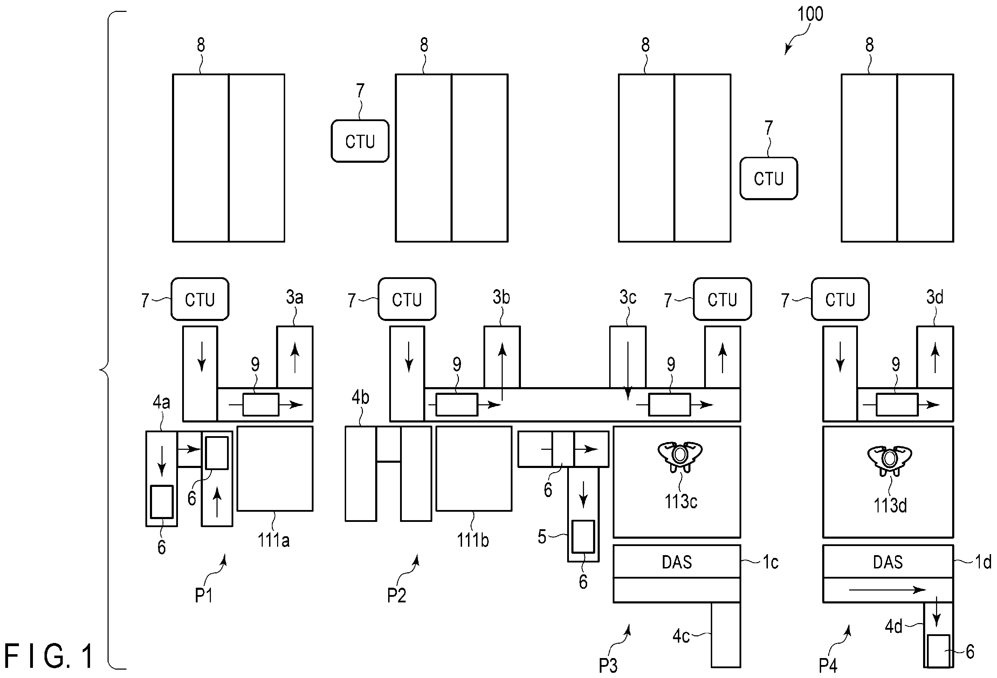

FIG. 1 is a diagram showing a configuration example of a picking system 100 according to the embodiment.

As shown in FIG. 1, the picking system 100 includes robot stations P1 and P2, human stations P3 and P4, an inter-station conveyor 5, a CTU 7, a shelf 8 and the like.

In the robot station P1, a conveyor 3a, a conveyor 4a, a picking robot 111a and the like are located.

The conveyor 3a conveys a storage case 9 from the CTU 7. The conveyor 3a loads the storage case 9 onto one end from the CTU 7. The conveyor 3a conveys the loaded storage case 9 to a position where it can be picked by the picking robot 111a (picking position). When the picking is completed, the conveyor 3a conveys the storage case 9 to a position where the storage case 9 can be picked up by the CTU 7 (return position). Here, the conveyor 3a is U-shaped with corners right angles.

The conveyor 4a conveys a dispensing case 6 into which the picked article is put. The dispensing case 6 is loaded onto one end of the conveyor 4a by an operator or a robot. The conveyor 4a conveys the loaded dispensing case 6 to a position where the picking robot 111a can put an article (put position). When the article putting is completed, the conveyor 4a conveys the dispensing case 6 to the other end.

The dispensing case 6 conveyed to the other end proceeds to a downstream process by a robot, an operator or the like.

The picking robot 111a picks an article from the storage case 9 conveyed to the picking position by the conveyor 3a. The picking robot 111a puts the picked article into the dispensing case 6 conveyed to the put position by the conveyor 4a.

Note that the picking robot 111a may pick a plurality of articles from the storage case 9 and put them into the dispensing case 6.

For example, the picking robot 111a includes an arm and a holding mechanism attached to the tip of the arm. The holding mechanism may be one that catches and holds an article. For example, the holding mechanism includes a pair of claws. The holding mechanism may also sucks and hold an article by negative pressure. The holding mechanism may hold two articles at once.

The configuration of the picking robot 111a is not limited to a specific one.

In the robot station P2, a conveyor 3b, a conveyor 4b, a picking robot 111b and the like are located.

The conveyor 4b is similar to the conveyor 4a.

The picking robot 111b (robot) picks an article from the storage case 9 conveyed to the picking position by the conveyor 3b. The picking robot 111b puts the picked article into the dispensing case 6 conveyed to the put position by the conveyor 4b. The picking robot 111b also puts an article into the dispensing case 6 on which the inter-station conveyor 5 is placed.

Note that the picking robot 111a may pick a plurality of articles from the storage case 9 and put them into the dispensing case 6.

The conveyor 3b conveys the storage case 9 from the CTU 7. The conveyor 3b loads the storage case 9 onto one end from the CTU 7. The conveyor 3b conveys the loaded storage case 9 to a position where it can be picked by the picking robot 111b (picking position). If the picking is completed, the conveyor 3b conveys the storage case 9 to a position where it can be picked up by the CTU 7 (return position).

In addition, the conveyor 3b is connected to a conveyor 3c described later. That is, the conveyor 3b can convey the storage case 9 to the conveyor 3c.

In the human station P3, a DAS 1c, a conveyor 3c, a conveyor 4c, an operator 113c and the like are located.

The DAS 1c stores a plurality of dispensing cases 6. The DAS 1c stores dispensing cases 6 supplied from a robot, an operator or the like. The DAS 1c supports a dispensing case 6 at a position where the operator 113c can put an article. The DAS 1c may include, for example, a lamp indicating the position of the dispensing case 6 into which an article is put by the operator 113c.

The DAS 1c supplies the dispensing case to the conveyor 4c.

The conveyor 3c conveys the storage case 9 from the CTU 7. The conveyor 3c loads the storage case 9 onto one end from the CTU 7. The conveyor 3c conveys the loaded storage case 9 to a position where it can be picked by the operator 113c (picking position). When the picking is completed, the conveyor 3c conveys the storage case 9 to a position where it can be picked by the CTU 7.

The conveyor 3c is connected to the conveyor 3b. The conveyor 3c can convey the storage case 9 from the conveyor 3b to the picking position.

The dispensing case 6 is conveyed from the conveyor 4c and the DAS 1c. When the article input to the dispensing case 6 is completed, the conveyor 4c conveys the dispensing case 6 from the DAS 1c.

The dispensing case 6 conveyed to the conveyor 4c proceeds to a downstream process by a robot, an operator or the like.

In the human station P4, a DAS 1d, a conveyor 3d, a conveyor 4d, an operator 113d and the like are located.

The DAS 1d and the conveyor 4d are similar to the DAS 1c and the conveyor 4c, respectively.

The conveyor 3d conveys the storage case 9 from the CTU 7. The conveyor 3d loads the storage case 9 onto one end from the CTU 7. The conveyor 3d conveys the loaded storage case 9 to a position where it can be picked by the operator 113d (picking position). When the picking is completed, the conveyor 3d conveys the storage case 9 to a position where it can be picked up by the CTU 7 (return position).

Note that the human stations P3 and P4 may be provided with a display device. The operators 113c and 113d visually confirm an article processing schedule and the like displayed on the display device to process the articles. Note that The display device may be a wireless communication terminal assigned to the operators 113c and 113d.

Note that the picking system 100 may include a plurality of cameras. One or some of the cameras may be fixed cameras and the others may be mobile cameras. The fixed cameras are fixed to, for example, ceilings, wall surfaces, and upper and side surfaces opposed to the robot stations P1 and P2 and human stations P3 and P4 to take pictures of the entire warehouse and articles processed in the warehouse and output taken-picture data in real time. The taken-picture data includes taken-picture date and time data (including taken-picture time) and captured image data. The captured image data are still image data and moving image data. In addition, the fixed cameras may be rotated up, down, right and left based on an imaging control signal from a WES 10 or the like described later. The fixed cameras rotate vertically and horizontally to monitor the interior of the warehouse over a wide range.

The shelf 8 stores a storage case 9 that stores articles. The shelf 8 stores a plurality of storage cases 9 in its height direction. The shelf 8 may store a plurality of storage cases 9 in its height direction and in the horizontal direction.

Here, the picking system 100 stores a plurality of shelves 8. The shelves 8 are spaced to allow the CTU 7 to pass therebetween.

The CTU (case transfer unit) 7 is an automated transfer device that transfers the storage case 9 loaded thereof. The CTU 7 acquires a storage case 9 from the shelf 8. Upon acquiring a storage case 9, the CTU 7 moves to any one of the conveyors 3a to 3d. When the storage case 9 moves to any one of the conveyors 3a to 3d, the CTU 7 loads the storage case 9 on any one of the conveyors 3a to 3d**.**

The CTU 7 will be described in detail later.

The inter-station conveyor 5 (conveyor) conveys a dispensing case 6 from the robot station P2 to its adjacent human station P3. That is, the inter-station conveyor 5 conveys the dispensing case 6 from the put position of the picking robot 111b to that of the operator 113. Note that the inter-station conveyor 5 may be used to put the dispensing case 6 into the DAS 1c.

Next is a description of a control system of the picking system 100.

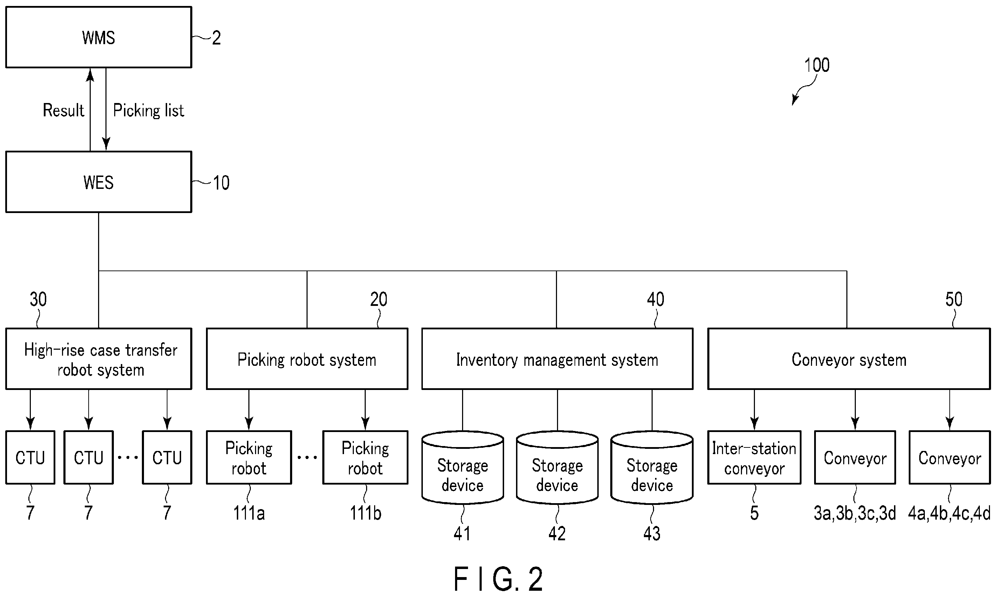

FIG. 2 is a block diagram showing a configuration example of the configuration of the control system of the picking system 100. As shown in FIG. 2, the picking system 100 includes a WMS 2, a conveyor system 50, a CTU 7, a WES 10, a picking robot system 20, a high-rise case transfer robot system 30, and storage devices 41 to 43.

The WES 10 is connected to the WMS 2, conveyor system 50, picking robot system 20, high-rise case transfer robot system 30 and an inventory management system 40. The high-rise case transfer robot system 30 is connected to the CTU 7. The conveyor system 50 is connected to the inter-station conveyor 5, conveyor 3 (3a to 3d) and conveyor 4 (4a to 4d). The picking robot system 20 is connected to the picking robots 111a and 111b. The inventory management system 40 is connected to the storage devices 41 to 43.

The inter-station conveyor 5, CTU 7 and picking robots 111a and 111b have been described above.

The WMS (warehouse management system) 2 is referred to as a warehouse management system and can be implemented by one or more computers. The WMS 2 transmits to the WES 10 a picking list indicating a picking operation for providing instructions to pick an article from the storage case 9. The picking list will be described in detail later.

The WES (warehouse execution system) (information processing device) 10 is referred to as a warehouse operation management system and can be implemented by one or more computers. Based on the picking list from the WMS and the like, the WES 10 controls the conveyor system 50, picking robot system 20, high-rise case transfer robot system 30, inventory management system 40 and the like. In addition, the WES 10 transmits a result of picking to the WMS 2.

The WES 10 will be described in detail later.

The picking robot system (robot system) 20 controls the picking robots 111 (111a and 111b) under the control of the WES 10. The picking robot system 20 functions as a controller of the picking robot 111. For example, the picking robot system 20 controls the holding, movement and release of articles, etc. The picking robot system 20 is, for example, a WCS (warehouse management system). The picking robot system 20 is configured by a PC and the like.

The high-rise case transfer robot system 30 (transfer system) controls the CTU 7 under the control of the WES 10. The high-rise case transfer robot system 30 functions as a controller of the CTU 7. For example, the high-rise case transfer robot system 30 controls the movement of the CTU 7, the acquisition of the storage case 9, the release of the storage case 9, and the like. The high-rise case transfer robot system 30 may also control the DAS 1 and display device for displaying information to the operator 113 (113a and 113b). In addition, the high-rise case transfer robot system 30 may control the conveyors 3 (3a to 3d) and conveyor 4 (4a to 4d). The high-rise case transfer robot system 30 is, for example, a WCS. The high-rise case transfer robot system 30 is configured by a PC and the like.

The inventory management system 40 manages a database related to the inventory or the like under the control of the WES 10. The inventory management system 40 is connected to the storage devices 41 to 43. For example, the inventory management system 40 is a WCS. The inventory management system 40 is configured by a PC and the like.

The storage device 41 stores an inventory layout database. The inventory layout database indicates articles stored in each storage case 9. The inventory layout database stores, for example, an identifier for identifying a storage case 9 and an identifier for identifying the articles stored in the storage case 9 in association with each other.

The storage device 42 stores an inventory master database. The inventory master database indicates information regarding articles stored in each storage case 9. The inventory layout database indicate, as information regarding an article, an identifier that identifies the article, the name of the article, the lot of the article, the dimensions of the article, or the safety inventory of the article.

The storage device 43 stores a picking availability flag database. The picking availability flag database stores a flag indicating whether an article can be picked by the picking robot 111. The picking availability flag database will be described in detail later.

The storage devices 41 to 43 are each configured by a nonvolatile memory or the like.

The conveyor system 50 controls the conveyors 3 (3a to 3d) and 4 (4a to 4d) and the inter-station conveyor 5. The conveyor system 50 is, for example, a WCS. The conveyor system 50 is configured by a PC, a programmable logic controller (PLC) and the like.

Next is a description of the WES 10.

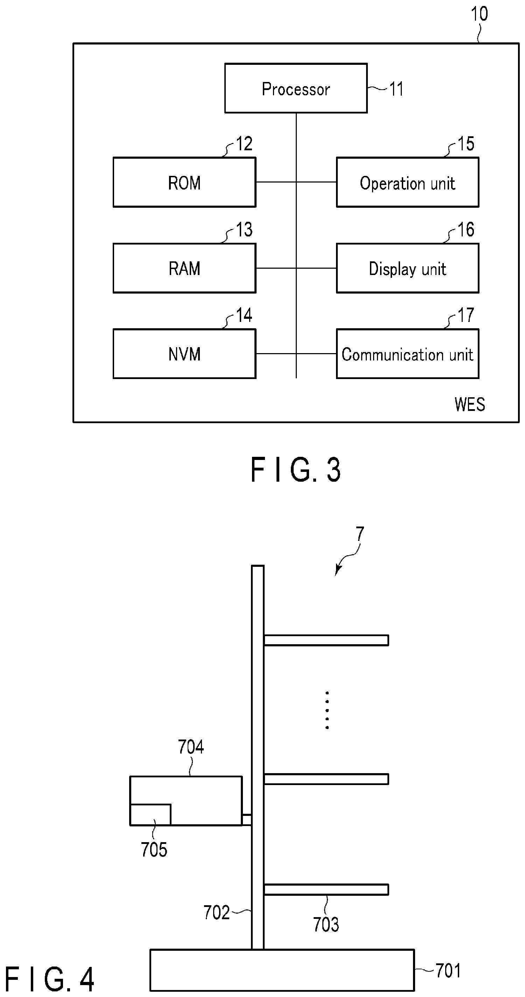

FIG. 3 is a block diagram showing a configuration example of the WES 10. As shown in FIG. 3, the WES 10 includes a processor 11, a ROM 12, a RAM 13, an NVM 14, an operation unit 15, a display unit 16, a communication unit 17 and the like.

The processor 11, ROM 12, RAM 13, NVM 14, operation unit 15, display unit 16 and communication unit 17 are connected to each other via a data bus or the like.

Note that the WES 10 may include a necessary component in addition to the components shown in FIG. 3 or a specific component may be excluded from the WES 10.

The processor 11 has a function of controlling the operation of the entire WES 10. The processor 11 may include an internal cache, a variety of interfaces and the like. The processor 11 executes programs stored in advance in the internal memory, ROM 12 or NVM 14 to perform a variety of processes.

Note that some of different functions performed by the processor 11 executing a program may be done by a hardware circuit. In this case, the processor 11 controls the functions performed by the hardware circuit.

The ROM 12 is a nonvolatile memory which stores control programs, control data and the like in advance. The control programs and control data are incorporated in advance in the ROM 12 in accordance with the specifications of the WES 10.

The RAM 13 is a volatile memory. The RAM 13 temporarily stores data that is being processed by the processor 11. The RAM 13 stores a variety of application programs based on instructions from the processor 11. In addition, the RAM 13 may store data necessary for executing the application programs, results of the execution of the application programs, and the like.

The NVM 14 is a nonvolatile memory capable of writing and rewriting data. The NVM 14 may be configured by a hard disk drive (HDD), a solid state drive (SSD), a flash memory or the like. The NVM 14 stores control programs, applications, various items of data and the like in accordance with the purpose of operation of the WES 10.

The operation unit 15 receives a variety of operations from an operator. The operation unit 15 transmits signals indicating the received operations to the processor 11. The operation unit 15 is configured by, for example, a mouse, a keyboard, a touch panel or the like.

The display unit 16 displays data from the processor 11. The display unit 16 is configured by, for example, a liquid crystal monitor. Note that in the case where the operation unit 15 is configured by a touch panel, the display unit 16 may be formed integrally with the touch panel.

The communication unit 17 is an interface which transmits and receives data to and from the WMS 2, conveyor system 50, picking robot system 20, high-rise case transfer robot system 30 and inventory management system 40. For example, the communication unit 17 is connected to the WMS 2, conveyor system 50, picking robot system 20, high-rise case transfer robot system 30 and inventory management system 40 via a network or the like. The communication unit 17 supports wired or wireless local area network (LAN) connection.

Note that the communication unit 17 may include an interface that transmits and receives data to and from the WMS 2, an interface that transmits and receives data to and from the conveyor system 50, an interface that transmits and receives data to and from the picking robot system 20, an interface that transmits and receives data to and from the high-rise case transfer robot system 30 and an interface that transmits and receives data to and from the inventory management system 40.

Next is a description of the CTU 7.

FIG. 4 is a side view of the CTU 7.

As shown in FIG. 4, the CTU 7 includes a base 701. The base 701 functions as a moving mechanism that moves the entire CTU 7. The base 701 includes, for example, a tire 70 to be described later. Note that the base 701 may include, for example, a camera that reads a code or the like stuck to the floor surface.

In addition, a member 702 is formed on the base 701 to extend upward. The member 702 is configured by, for example, two rod-shaped members extending upward and a rod-shaped member connected to and formed between the members. That is, the member 702 is formed in a ladder shape.

A plurality of rear trays 703 are formed on the member 702. The rear trays 703 are plate-like members extending in a horizontal direction from the member 702. The storage cases 9 are loaded on the rear trays 703. One storage case 9 is loaded on each rear tray 703.

A shuttle unit 704 is formed on the member 702. The shuttle unit 704 is formed in a direction opposite to the rear tray 703 with respect to the member 702. The shuttle unit 704 can be moved up and down along the member 702 by a drive unit 76 to be described later.

The shuttle unit 704 holds the storage case 9 in front (left side in FIG. 4). The shuttle unit 704 loads the held storage case 9 on one of the rear trays 703.

The shuttle unit 704 also holds the storage case 9 loaded on one of the rear trays 703. The shuttle unit 704 releases the held storage case 9 in front thereof.

The shuttle unit 704 acquires a storage case 9 from the shelf 8. The shuttle unit 704 sets a storage case 9 on the shelf 8.

The shuttle part 704 includes a camera 705. The camera 705 is installed so as to photograph the front. A camera 705 photographs a cord or the like. The camera 705 may be provided with an illumination or the like.

Next is a description of the control system of the CTU 7.

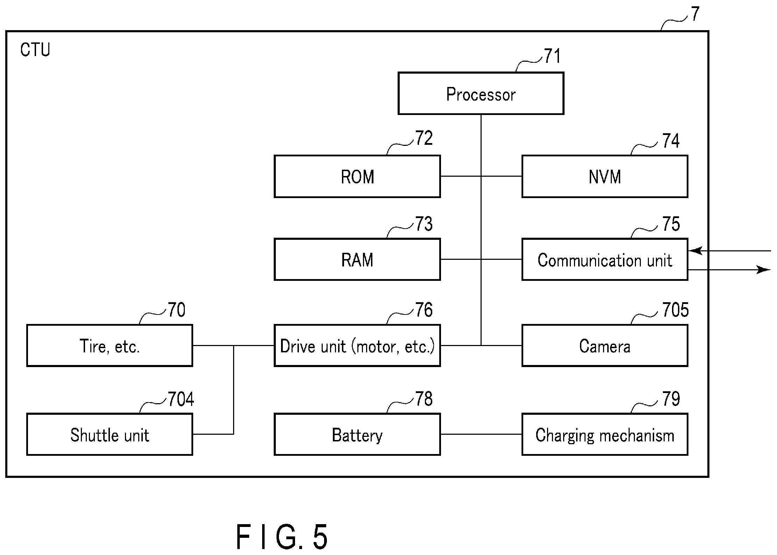

FIG. 5 is a block diagram showing a configuration example of the CTU 7. The CTU 7 includes a processor 71, a ROM 72, a RAM 73, an NVM 74, a communication unit 75, a drive unit 76, a battery 78, a charging mechanism 79, a tire 70, a shuttle unit 704, a camera 705 and the like.

The processor 71 has a function of controlling the operation of the entire CTU 7. The processor 71 may include an internal cache, a variety of interfaces and the like. The processor 71 executes programs stored in advance in the internal memory, ROM 12 or NVM 14 to perform a variety of processes.

The processor 71 is, for example, a central processing unit (CPU). Note that the processor 71 may be implemented by hardware such as large scale integration (LSI), an application specific integrated circuit (ASIC) or a field-programmable gate array (FPGA).

The ROM 72 is a non-transitory computer readable storage medium that stores the programs described above. The ROM 72 also stores data or various set values used by the processor 71 to perform a variety of processes. The RAM 73 is a memory for use in reading and writing data. The RAM 73 is used as what is called a work area or the like for storing data temporarily to cause the processor 71 to process a variety of processes.

The NVM 74 is a non-transitory computer readable storage medium that may store the programs described above. The NVM 74 also stores data used to cause the processor 71 to perform a variety of processes, data generated as a result of the processing by the processor 71, or various set values.

The communication unit 75 is an interface which transmits and receives data to and from the high-rise case transfer robot system 30 and the like via a wireless LAN access point or the like. For example, the communication unit 75 supports wireless LAN connection.

The drive unit 76 drives the tire 70. The drive unit 76 is a motor or the like which rotates the tire 70, and the motor is rotated or stopped based on a drive signal output from the processor 71. The motor transmits its power to the tire 70. The power from the motor moves the CTU 7 to a target position.

In addition, the drive unit 76 drives the shuttle unit 704. For example, the drive unit 76 moves the shuttle unit 704 in the vertical direction. The drive unit 76 causes the shuttle unit 704 to perform a holding operation. The drive unit 76 is a motor or the like which drives the shuttle unit 704.

Note that the drive unit 76 may be configured by a mechanism for driving the tire 70 and a mechanism for driving the shuttle unit 704.

The battery 78 applies necessary electric power to the drive unit 76 and the like. The charging mechanism 79 is a mechanism that connects a charging station to the battery 78, and the battery 78 is charged by electric power applied from the charging station or the like via the charging mechanism 79.

The tire 70 is rotated by power from the drive unit 76. As the tire 70 is rotated, the CTU 7 moves forward, moves backward or changes in direction.

Note that the CTU 7 may include a configuration as required in addition to the configurations shown in FIGS. 4 and 5 or a specific configuration may be excluded from the CTU 7.

The processor 71 performs a process such as acceleration, deceleration, stop, change in direction, and calculation and control necessary for the operation of the shuttle unit 704. In response to a control signal from the high-rise case transfer robot system 30 or the like, the processor 71 executes a program stored in the ROM 72, NVM 74 or the like, thus generating a drive signal and then outputting it to each unit.

The processor 71 of the CTU 7 outputs a drive signal corresponding to the control signal transmitted from the high-rise case transfer robot system 30. Thus, the CTU 7 moves to a predetermined position from the current position and performs operations of holding, releasing, loading, etc. of the storage cases 9.

Next is a description of the picking availability flag database.

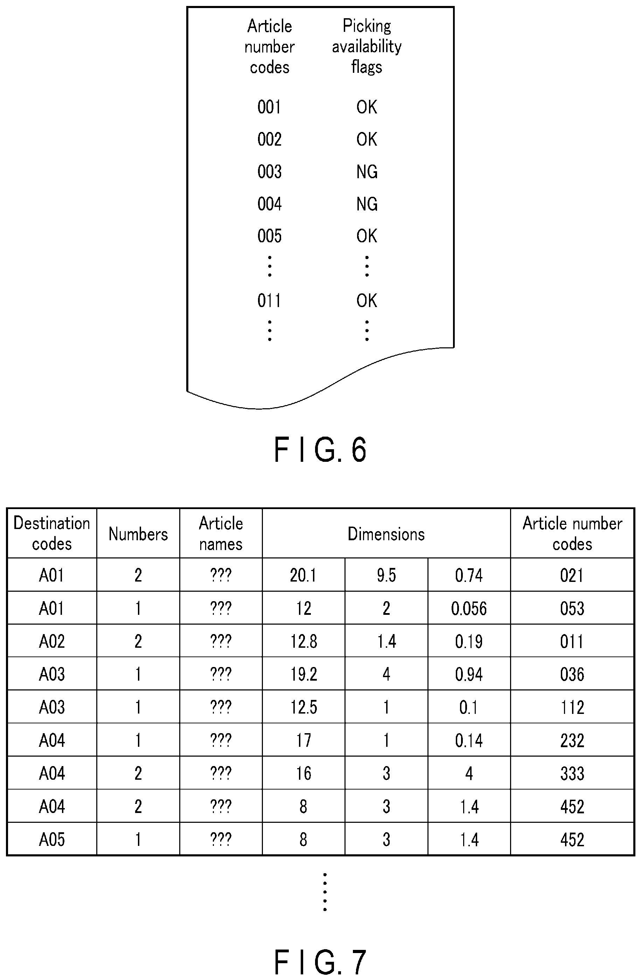

FIG. 6 shows a configuration example of the picking availability flag database. As shown in FIG. 6, the picking availability flag database stores article number codes and their corresponding picking availability flags.

The article number codes are identifiers each identifying an article. Here, the article number codes are numerical values. Note that the article number codes are not limited to a specific configuration.

The picking availability flags each indicate whether an article indicated by the corresponding article number code can be picked by the picking robot 111. Each of the picking availability flags is "OK" or "NG." "OK" indicates that an article indicated by the corresponding article number code can be picked by the picking robot 111. "NG" indicates that an article indicated by the corresponding article number code cannot pickable by the picking robot 111.

The picking availability flag database is stored in advance in the storage device 43. In addition, the picking availability flag database may be updated as appropriate.

Next is a description of a function achieved by the WES 10. The function is implemented by the WES 10 by the processor 11 executing programs stored in the internal memory, ROM 12, NVM 14 or the like.

First, the processor 11 has a function of acquiring a picking list from the WMS 2.

For example, the processor 11 transmits a request for the picking list to the WMS 2 through the communication unit 17. The processor 11 receives a response including the picking list from the WMS 2 through the communication unit 17.

The processor 11 may also receive the picking list from the WMS 2 by push notification through the communication unit 17.

FIG. 7 shows an example of the picking list. As shown in FIG. 7, the picking list includes a plurality of picking operations. As the picking operations, "destination codes," "numbers," "article names," "dimensions" and "article number codes" are stored in association with each other.

The "destination code" indicate the destinations to which articles to be picked are transferred. Here, the destinations correspond to the dispensing cases 6. That is, articles having the same "destination code" are put into the same dispensing case 6.

"Numbers" indicate the number of articles.

"Article names" indicate the names of articles.

"Dimensions" indicate the dimensions of articles. Here, "dimensions" indicate the length of three sides.

"Article number codes" indicate the article number codes each indicating an article.

Note that the picking list may include a configuration as required in addition to the configuration shown in FIG. 7, or a specific configuration may be excluded from the picking list. The configuration of the picking list is not limited to a specific one.

In addition, the processor 11 has a function of generating an order indicating a picking operation of putting articles into the same dispensing case 6.

The processor 11 acquires the picking availability flag database from the storage device 43 through the communication unit 17 and the inventory management system 40. When the processor 11 acquires the picking availability flag database, it associates an article number code indicated by each picking operation with a picking availability flag based on the picking availability flag database.

First is a description of an operation example in which the processor 11 generates an order (robot processing order) including an operation of picking an article whose picking availability flag is "OK" (robot processing task, first picking operation).

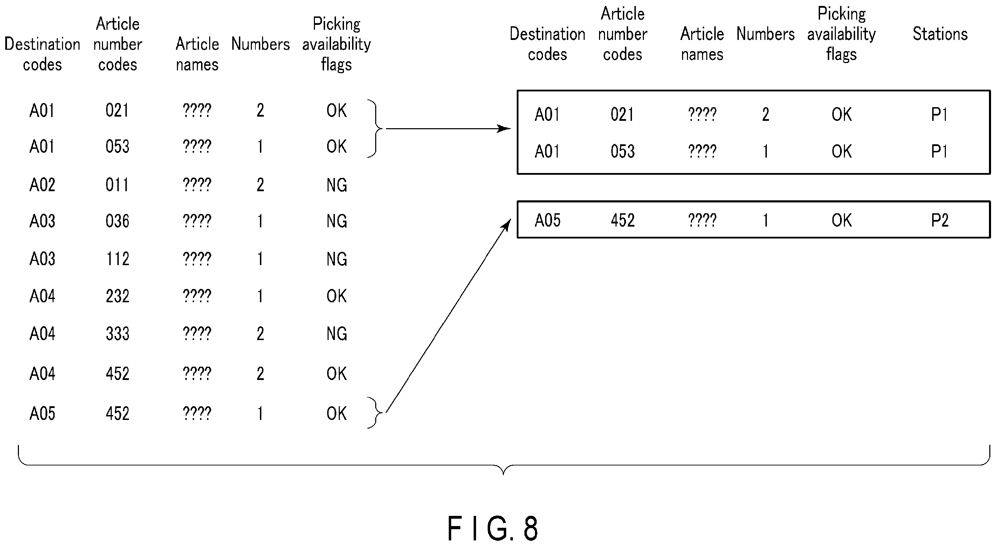

FIG. 8 shows an operation example in which the processor 11 generates a robot processing order.

In FIG. 8, the processor 11 acquires a picking operation whose "destination code" is "A01." Here, the processor 11 acquires two picking operations whose "destination codes" are "A01."

In both the picking operations whose "destination codes" are "A01," the "picking availability flags" indicate "OK."

Accordingly, the processor 11 generates a robot processing order indicating the acquired two picking operations (robot processing tasks). The processor 11 assigns a robot station P1 to the robot processing order as a station for processing the robot processing order.

The processor 11 also acquires a picking operation whose "destination code" is "A05." Here, the processor 11 acquires one picking operation whose "destination code" is "A05."

In the picking operation whose "destination code" is "A05," the "picking availability flag" indicates "OK."

Accordingly, the processor 11 generates a robot processing order indicating the acquired one picking operation (robot processing). The processor 11 assigns a robot station P2 to the robot processing order as a station for processing the robot processing order.

Next is a description of an operation example in which the processor 11 generates an order (human processing order) including an operation of picking an article whose picking availability flag is "NG" (human processing, second picking operation).

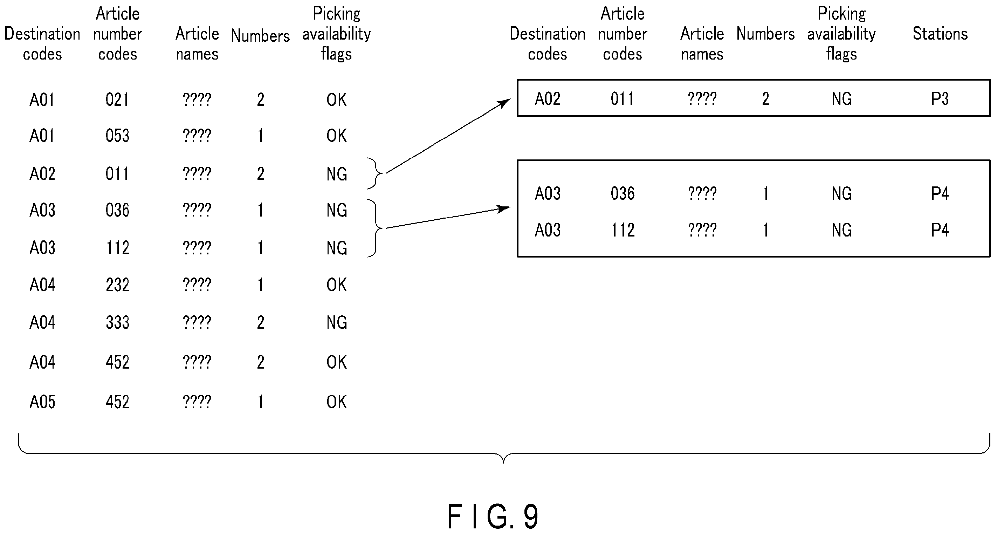

FIG. 9 shows an operation example in which the processor 11 generates a human processing order.

In FIG. 9, the processor 11 acquires a picking operation whose "destination code" is "A02." Here, the processor 11 acquires one picking operation whose "destination code" is "A02."

In the picking operation whose "destination code" is "A02," the "picking availability flag" indicates "NG."

Accordingly, the processor 11 generates a human processing order indicating the acquired one picking operation (human processing task). The processor 11 assigns a human station P3 to the human processing order as a station for processing the human processing order.

The processor 11 also acquires a picking operation whose "destination code" is "A03." Here, the processor 11 acquires two picking operations whose "destination codes" are "A03."

In both the picking operations whose "destination codes" are "A03," the "picking availability flag" indicates "NG."

Accordingly, the processor 11 generates a human processing order indicating the acquired two picking operations (human processing tasks). The processor 11 assigns a human station P4 to the human processing order as a station for processing the human processing order.

Next is a description of an operation example in which the processor 11 generates an order (mixed order) including an operation of picking an article whose picking availability flag is "OK" and an operation of picking an article whose picking availability flag is "NG."

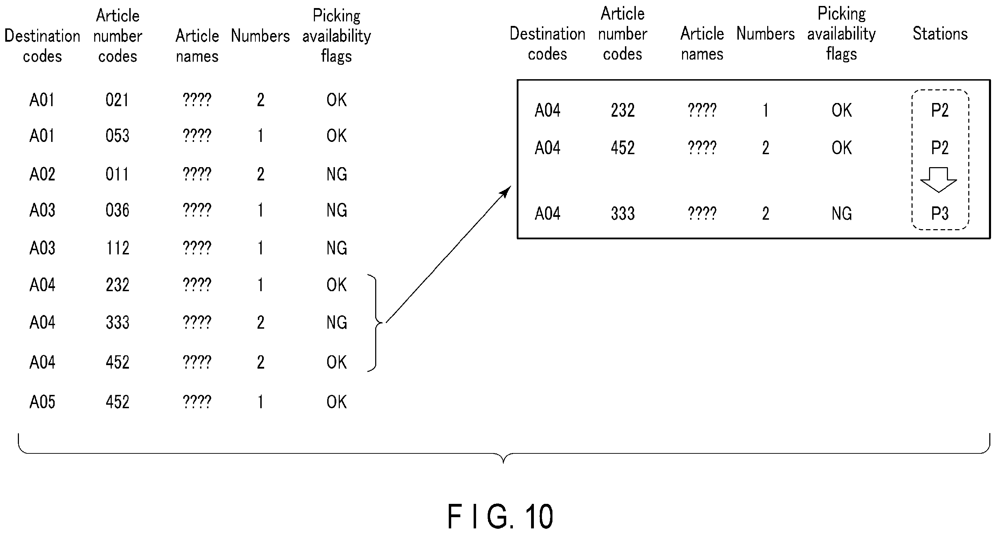

FIG. 10 shows an operation example in which the processor 11 generates a mixed order.

In FIG. 10, the processor 11 acquires a picking operation whose "destination code" is "A04." Here, the processor 11 acquires three picking operations whose "destination codes" are "A04."

The picking operations whose "destination codes" are "A04" include two robot processing tasks and one picking human processing task.

The processor 11 generates a mixed order indicating the obtained three picking operations. In addition, the processor 11 assigns a robot station P2 to the two robot processing tasks in the mixed order as a station for processing the two robot processing tasks. The processor 11 also assigns a human station P3 to one human processing task in the mixed order as a station for processing the one human processing task.

Here, the processor 11 assigns picking operations to the robot station P2 and the human station P3 which are connected to each other by the inter-station conveyor 5.

In addition, the processor 11 has a function of processing orders using the CTU 7 and the picking robot 111.

First is a description of an operation example in which the processor 11 processes the mixed order.

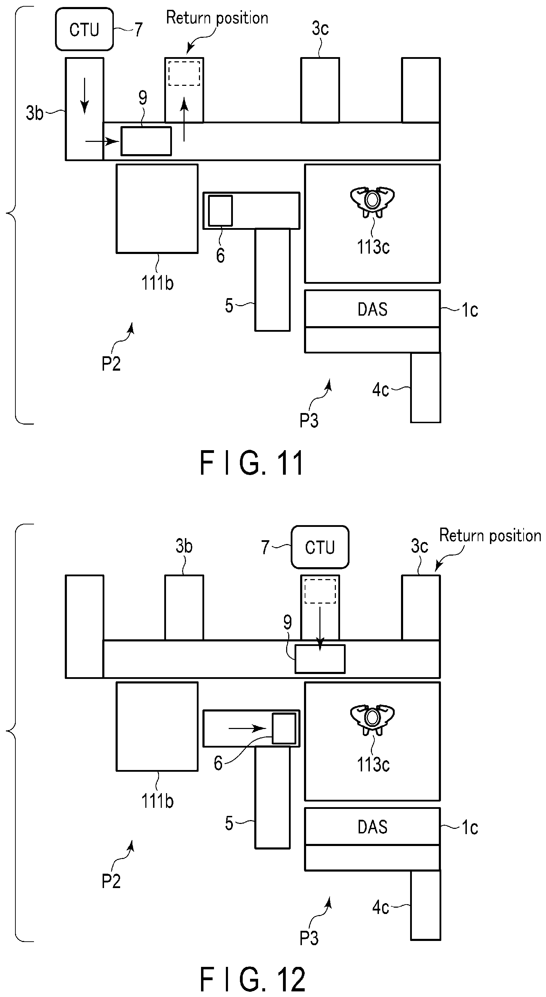

FIGS. 11 to 13 show an operation examples in which the processor 11 processes the mixed order.

The processor 11 extracts a robot processing task from the mixed order. When the processor 11 extracts the robot processing task, it refers to the inventory layout database and the like to specify a storage case 9 for storing an article to be picked in the robot processing task. When the processor 11 specifies the storage case 9, it causes the CTU 7 to acquire the storage case 9 from the shelf 8 through the high-rise case transfer robot system 30.

When the processor 11 causes the CTU 7 to acquire the storage case 9, it causes the CTU 7 to load the storage case 9 on one end of the conveyor 3b through the high-rise case transfer robot system 30, as shown in FIG. 11.

In addition, it is assumed in FIG. 11 that the dispensing case 6 is loaded on the inter-station conveyor 5. It is also assumed that the dispensing case 6 is located at the putting position of the picking robot 111b.

When the CTU 7 loads the storage case 9 on one end of the conveyor 3b, the conveyor 3b conveys the storage case 9 to the picking position of the picking robot 111b. When the conveyor 3b conveys the storage case 9 to the picking position, the processor 11 causes the picking robot 111b to pick an article and put it into the dispensing case 6 through the picking robot system 20.

When the picking robot 111b picks the article and puts it into the dispensing case 6, the conveyor 3b conveys the storage case 9 to a return position. When the conveyor 3b conveys the storage case 9 to the return position, the processor 11 causes the CTU 7 to acquire the storage case 9 from the return position through the high-rise case transfer robot system 30. When the processor 11 causes the CTU 7 to acquire the storage case 9, it causes the CTU 7 to return the storage case 9 to the shelf 8 through the high-rise case transfer robot system 30.

Note that if a plurality of robot processing tasks are included in the mixed order, the processor 11 processes each robot processing task as described above.

When the processor 11 processes the robot processing task, it conveys the dispensing case 6 from the robot station P2 to the human station P3 using the inter-station conveyor 5, as shown in FIG. 12. That is, the processor 11 conveys the dispensing case 6 from the putting position of the picking robot 111b to that of the operator 113c using using the inter-station conveyor 5.

When the processor 11 conveys the dispensing case 6, it extracts a human processing task from the mixed order. When the processor 11 extracts the human processing task, it refers to the inventory layout database and the like to specify a storage case 9 for storing an article to be picked in the human processing task. When the processor 11 conveys specifies the storage case 9, it causes the CTU 7 to acquire the storage case 9 from the shelf 8 through the high-rise case transfer robot system 30.

When the processor 11 causes the CTU 7 to acquire the storage case 9, it causes the CTU 7 to load the storage case 9 on one end of the conveyor 3c through the high-rise case transfer robot system 30.

When the CTU 7 loads the storage case 9 on one end of the conveyor 3c, the conveyor 3c conveys the storage case 9 to the picking position of the operator 113c.

When the conveyor 3c conveys the storage case 9 to the picking position, the processor 11 causes the operator 113c to pick the article and put it into the dispensing case 6. For example, the high-rise case transfer robot system 30 displays, on a display device or the like, an article to be picked and a place into which the article is put.

In addition, the high-rise case transfer robot system 30 may receive from the operator 113c an operation indicating that the article is completely put.

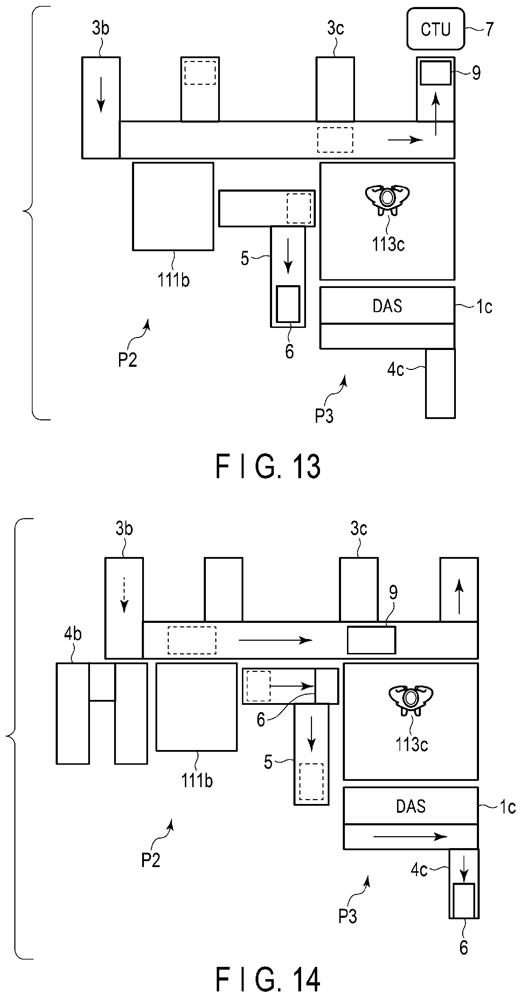

When the operator 113c picks the article and puts it into the dispensing case 6, the conveyor 3c conveys the storage case 9 to the return position as shown in FIG. 13. When the conveyor 3c conveys the storage case 9 to the return position, the processor 11 causes the CTU 7 to acquire the storage case 9 from the return position through the high-rise case transfer robot system 30. When the processor 11 causes the CTU 7 to acquire the storage case 9, it causes the CTU 7 to return the storage case 9 to the shelf 8 through the high-rise case transfer robot system 30.

Note that if a plurality of human processing tasks are included in the mixed order, the processor 11 processes each human processing task as described above.

When the processor 11 processes the human processing task, it conveys the dispensing case 6 to a predetermined position (e.g., one end of the inter-station conveyor 5) using the inter-station conveyor 5.

Next is a description of an operation example in which the picking robot 111b fails to pick an article.

FIG. 14 shows an operation example in which the picking robot 111b fails to pick an article.

If the picking robot 111b fails to pick an article from the storage case 9, it transmits a control signal indicating the failure of the picking to the WES 10 through the high-rise case transfer robot system 30.

If the picking robot 111b fails to pick an article, the conveyor 3b conveys the dispensing case 6 to the conveyor 3c. The conveyor 3c conveys the dispensing case 6 to the picking position of the operator 113c.

The processor 11 of the WES 10 receives the control signal through the communication unit 17. Upon receiving the control signal, the processor 11 conveys the dispensing case 6 from the robot station P2 to the human station P3 using the inter-station conveyor 5. That is, the processor 11 conveys the dispensing case 6 from the putting position of the picking robot 111b to that of the operator 113c using the inter-station conveyor 5.

When the processor 11 conveys the dispensing case 6, it causes the operator 113c to pick the article and put it into the dispensing case 6. For example, the high-rise case transfer robot system 30 displays, on a display device or the like, an article to be picked and a place into which the article is put. In addition, the high-rise case transfer robot system 30 may receive from the operator 113c an operation indicating that the article is completely put.

When the operator 113c picks the article and puts it into the dispensing case 6, the conveyor 3c conveys the storage case 9 to the return position. When the conveyor 3c conveys the storage case 9 to the return position, the processor 11 causes the CTU 7 to acquire the storage case 9 from the return position through the high-rise case transfer robot system 30. When the processor 11 causes the CTU 7 to acquire the storage case 9, it causes the CTU 7 to return the storage case 9 to the shelf 8 through the high-rise case transfer robot system 30.

Note that if there is any unprocessed robot processing task, the processor 11 may use the inter-station conveyor 5 to convey the dispensing case 6 from the human station P3 to the robot station P2. That is, the processor 11 may use the inter-station conveyor 5 to convey the dispensing case 6 from the putting position of the operator 113c to that of the picking robot 111b.

Since the operation example in which the processor 11 processes the robot processing order is similar to the operation example in which the processor 1 performs the above robot processing task, its description is omitted. In addition, since the operation example in which the processor 11 processes the human processing order is similar to the operation example in which the processor 11 performs the human processing task, its description is omitted.

Next is a description of an operation example of the WES 10.

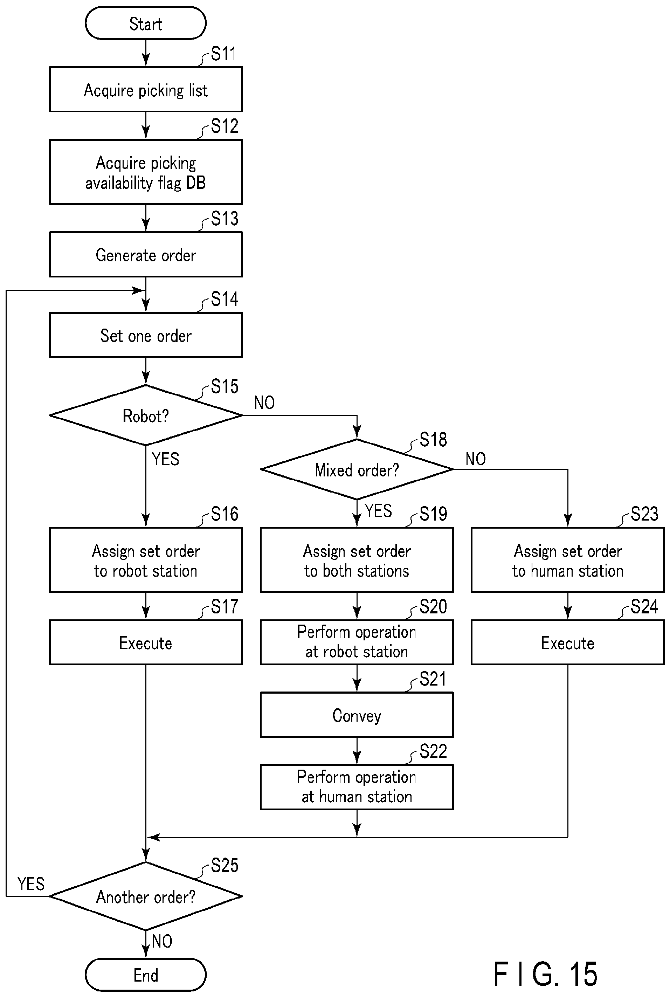

FIG. 15 is a flowchart illustrating an operation example of the WES 10.

First, the processor 11 acquires a picking list from the WMS 2 through the communication unit 17 (S11). When the processor 11 acquires the picking list, it acquires a picking availability flag database (S12).

When the processor 11 acquires the picking availability flag database, it generates an order based on the picking list and the picking availability flag database (S13).

When the processor 11 generates the order, it sets one order (S14). When the processor 11 sets the one order, it determines whether the set order is a robot processing order (S15).

If the processor 11 determines that the set order is a robot processing order (Yes in S15), it assigns the set order to the robot station P1 or P2 (S16). When the processor 11 assigns the set order is to the robot station P1 or P2, it processes the set order using the picking robot system 20 and the high-rise case transfer robot system 30 (S17).

If the processor 11 determines that the set order is not a robot processing order (No in S15), it determines whether the set order is a mixed order (S18). If the processor 11 determines that the set order is a mixed order (Yes in S18), it assigns the robot processing task of the set order to the robot station P2 and assigns the human processing task of the set order to the human station P3 (S19).

When the processor 11 assigns the picking operation to a station, it processes the robot processing task of the set order using the picking robot system 20 and the high-rise case transfer robot system 30 (S20).

When the processor 11 performs the robot processing task, it uses the inter-station conveyor 5 to convey the dispensing case 6 into which an article is put by the picking robot 111b from the robot station P2 to the human station P3 (S21).

When the processor 11 conveys the dispensing case 6 to the human station P3, it causes the operator 113c to pick the article (S22).

If the processor 11 determines that the set order is not a mixed order (i.e., the set order is a human processing order) (No in S18), it assigns the set order to the human station P3 or P4 (S23). When the processor 11 assigns the set order to the human station P3 or P4, it causes the operator 113c or 113d to pick the article (S24).

If the processor 11 processes the set order (S17) or if the processor 11 causes the operator 113c to pick an article (S22) or if the processor 11 causes the operator 113c or 113d to pick an article (S24), it determines whether there is an unprocessed order (S25).

If the processor 11 determines that there is an unprocessed order (Yes in S25), it returns to S14.

If the processor 11 determines that there is no unprocessed order (No in S25), it terminates the operation.

Next is a description of an operation example in which the picking system 100 processes the mixed order (corresponding to S20 to S22).

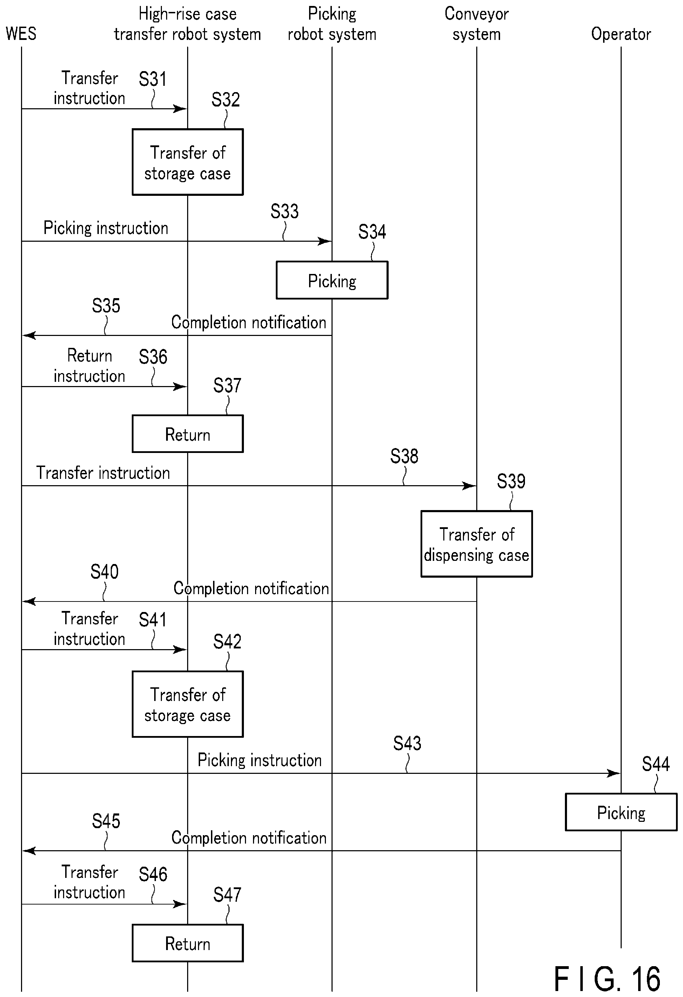

FIG. 16 is a sequence diagram illustrating an operation example in which the picking system 100 processes the mixed order.

It is assumed here that the dispensing case 6 is set at the input position of the picking robot 111b in the inter-station conveyor 5.

First, the processor 11 of the WES 10 transmits, to the high-rise case transfer robot system 30 through the communication unit 17, a control signal that provides an instruction to transfer to the robot station P2 the storage case 9 for storing an article to be picked (S31).

The high-rise case transfer robot system 30 receives the control signal. Upon receiving the control signal, the high-rise case transfer robot system 30 causes the CTU 7 to take the storage case 9 out of the shelf 8 and transfer it to the robot station P2 (S32).

When the CTU 7 transfers the storage case 9 to the robot station P2, the processor 11 of the WES 10 transmits, to the picking robot system 20 through the communication unit 17, a control signal that provides an instruction to pick an article from the storage case 9 (S33).

The picking robot system 20 receives the control signal. Upon receiving the control signal, the picking robot system 20 causes the picking robot 111b to pick the article from the storage case 9 and put it into the dispensing case 6 (S34).

When the picking robot 111 puts the article into the dispensing case 6, the picking robot system 20 transmits to the WES 10 a completion notification indicating that the picking is completed (S35).

The processor 11 of the WES 10 receives the completion notification through the communication unit 17. Upon receipt of the completion notification, the processor 11 transmits to the high-rise case transfer robot system 30 through the communication unit 17 (S36) a control signal that provides an instruction to return the storage case 9 to the shelf 8.

The high-rise case transfer robot system 30 receives the control signal. Upon receiving the control signal, the high-rise case transfer robot system 30 causes the CTU 7 to transfer the storage case 9 and return it to the shelf 8 (S37).

Note that if the mixed order includes a plurality of robot processing tasks, the picking system 100 repeats S31 to S37 for each of the robot processing tasks.

When the processor 11 transmits the control signal, it transmits to the conveyor system 50 a control signal that instructs the conveyor system 50 to convey the dispensing case 6 from the robot station P2 to the human station P3 using the inter-station conveyor 5 (S38). Upon receiving the control signal, the conveyor system 50 conveys the dispensing case 6 from the robot station P2 to the human station P3 using the inter-station conveyor 5 (S39).

When the conveyance of the dispensing case 6 is completed, the conveyor system 50 transmits to the WES 10 a completion notice indicating that the conveyance of the dispensing case 6 is completed (S40).

The processor 11 of the WES 10 receives the completion notification through the communication unit 17. Upon receipt of the completion notice, the processor 11 transmits to the high-rise case transfer robot system 30 a control signal that provides an instruction to transfer the storage case 9 for storing an article to be picked to the human station P3 (S41).

The high-rise case transfer robot system 30 receives the control signal. Upon receiving the control signal, the high-rise case transfer robot system 30 causes the CTU 7 to take the storage case 9 out of the shelf 8 and transfer it to the human station P3 (S42).

When the CTU 7 transfers the storage case 9 to the human station P3, the processor 11 of the WES 10 instructs the operator 113c to pick the article from the storage case 9 and put it into the dispensing case 6 through the high-rise case transfer robot system 30 or the like, (S43).

Here, the operator 113c picks the article from the storage case 9 and puts it into the dispensing case 6 (S44). When the operator 113c puts the article into the dispensing case 6, it inputs an operation indicating that the picking of the article is completed to the WES 10 through the high-rise case transfer robot system 30 or the like (S45).

The processor 11 of the WES 10 receives the operation. Upon receiving the operation, the processor 11 transmits a control signal that provides an instruction to return the storage case 9 to the shelf 8 to the high-rise case transfer robot system 30 (S46).

The high-rise case transfer robot system 30 receives the control signal. Upon receiving the control signal, the high-rise case transfer robot system 30 causes the CTU 7 to transfer the storage case 9 and return it to the shelf 8 (S47).

Note that if the mixed order includes a plurality of human processing tasks, the picking system 100 repeats S39 to S45 for each of the robot processing tasks.

Next is a description of another example of the picking system 100.

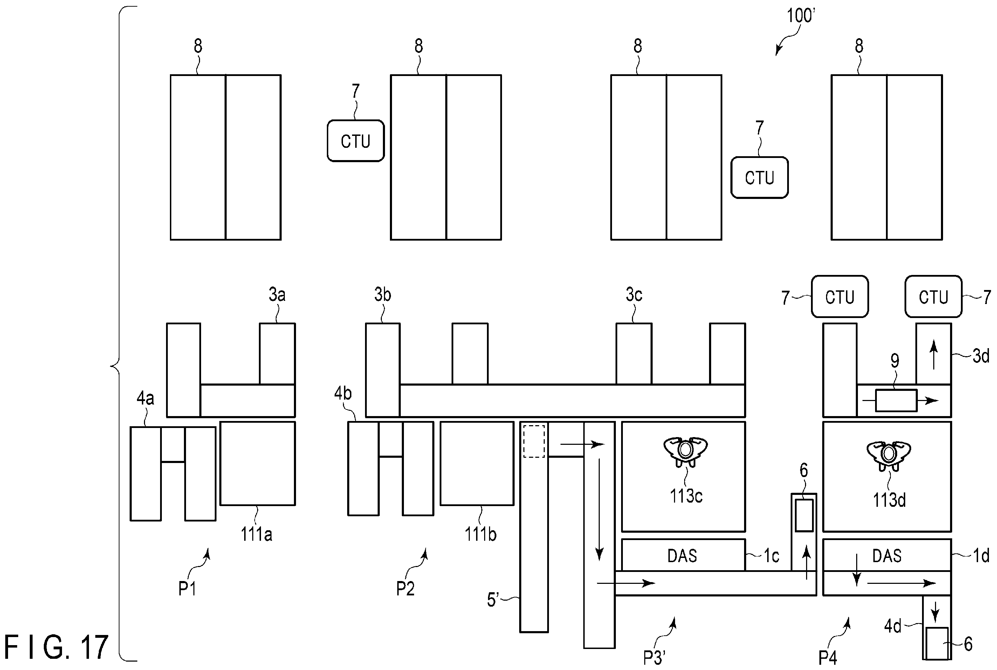

FIG. 17 shows a configuration example of another picking system 100'. As shown in FIG. 17, the picking system 100' includes robot stations P1 and P2, human stations P3' and P4, an inter-station conveyor 5'**,** a CTU 7, a shelf 8 and the like.

The robot stations P1 and P2, human station P4, CTU 7 and shelf 8 are ones as described above.

A DAS 1c, a conveyor 3c, an operator 113c and the like are located in the human station P3'. The DAS 1c, conveyor 3c and operator 113c are ones as described above.

The inter-station conveyor 5' conveys the dispensing case 6 between the robot station P2, human station P3' and human station P4 under the control of the conveyor system 50 that has received an instruction from the processor 11. That is, the inter-station conveyor 5' conveys the dispensing case 6 from the put position of the picking robot 111b to those of the operators 113c and 113d.

The inter-station conveyor 5' may put the dispensing case 6 into the DAS 1c and DAS 1d.

Here, the processor 11 may assign the human station P3' or P4 to the human processing task of the mixed order.

Next is a description of still another example of the picking system 100.

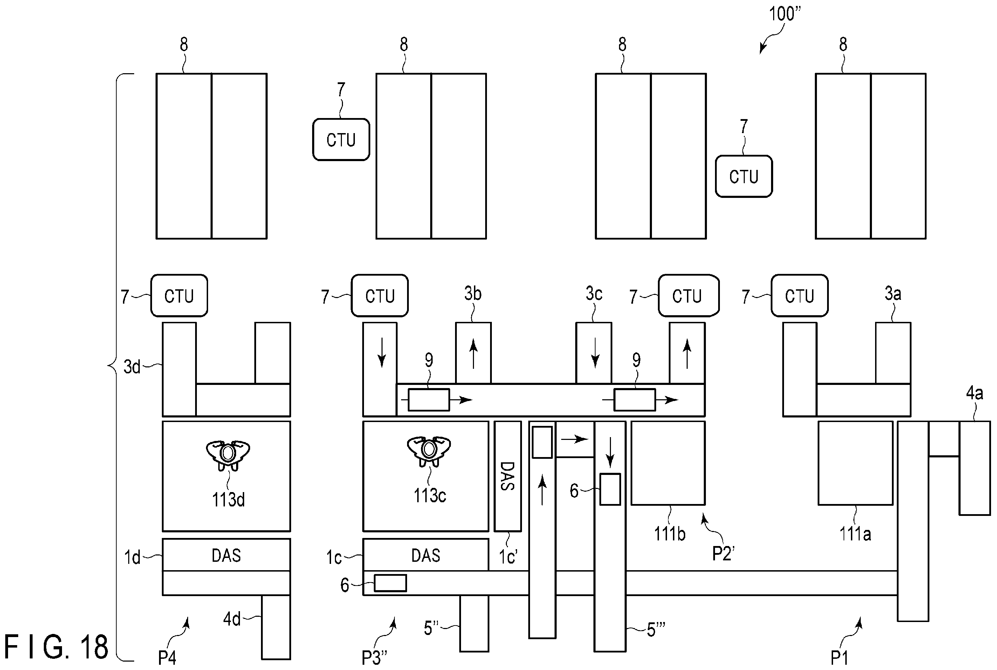

FIG. 18 shows a configuration example of another picking system 100''. As shown in FIG. 18, the picking system 100'' includes robot stations P1 and P2'**',** human stations P3'' and P4, inter-station conveyors 5'' and 5‴, a CTU 7, a shelve 8 and the like.

The robot station P1, human station P4, CTU 7 and shelf 8 are ones as described above.

A conveyor 3b and a picking robot 111b are located in the robot station P2'. The conveyor 3b and the picking robot 111b are ones as described above.

A DAS 1c, a DAS 1c', a conveyor 3c, an operator 113c and the like are located in the human station P3''. The DAS 1c, conveyor 3c and operator 113c are ones as described above.

The DAS 1c' is located so as to be orthogonal to the DAS 1c. The DAS 1c' stores a plurality of dispensing cases 6. The DAS 1c' stores the dispensing cases 6 supplied from the robot or the operator. The DAS 1c' supports the dispensing case 6 in a position where the operator 113c can put an article. The DAS 1c' may include, for example, a lamp indicating the position of the dispensing case 6 into which an article is put by the operator 113c.

The inter-station conveyor 5'' conveys the dispensing case 6 from the human station P3'' to the robot station P1 under the control of the processor 11. Here, the inter-station conveyor 5'' conveys the dispensing case 6 from the DAS 1c to the conveyor 4a.

The inter-station conveyor 5‴ conveys the dispensing case 6 from the human station P3'' to the robot station P2' under the control of the processor 11. Here, the inter-station conveyor 5‴ conveys the dispensing case 6 from the DAS 1c' to the put position of the picking robot 111b.

Next is a description of an operation example in which the processor 11 processes the mixed order.

First, the processor 11 extracts a human processing task from the mixed order. When the processor 11 extracts the human processing task, it refers to the inventory layout database and the like to specify a storage case 9 for storing an article to be picked in the human processing task. When the processor 11 specifies the storage case 9, it causes the CTU 7 to acquire the storage case 9 from the shelf 8 through the high-rise case transfer robot system 30.

When the processor 11 causes the CTU 7 to acquire the storage case 9, it causes the CTU 7 to load the storage case 9 on one end of the conveyor 3c through the high-rise case transfer robot system 30.

When the CTU 7 loads the storage case 9 on one end of the conveyor 3c, the conveyor 3c conveys the storage case 9 to the picking position of the operator 113c.

When the conveyor 3c conveys the storage case 9 to the picking position, the processor 11 causes the operator 113c to pick the article and put it into the dispensing case 6 of the DAS 1c or 1c'. For example, the high-rise case transfer robot system 30 displays, on a display device or the like, an article to be picked and a place into which the article is put. In addition, the high-rise case transfer robot system 30 may receive from the operator 113c an operation indicating that the article is completely put.

When the operator 113c picks the article and puts it into the dispensing case 6, the conveyor 3c conveys the storage case 9 to the return position. When the conveyor 3c conveys the storage case 9 to the return position, the processor 11 causes the CTU 7 to acquire the storage case 9 from the return position through the high-rise case transfer robot system 30. When the processor 11 causes the CTU 7 to acquire the storage case 9, it causes the CTU 7 to return the storage case 9 to the shelf 8 through the high-rise case transfer robot system 30.

Note that if a plurality of human processing tasks are included in the mixed order, the processor 11 processes each of the human processing tasks as described above.

Upon processing the human processing work, the processor 11 conveys the dispensing case 6 from the human station P3' to the robot station P1 or P2' using the inter-station conveyor 5" or 5‴.

When the processor 11 conveys the dispensing case 6, it extracts a robot processing task from the mixed order. When the processor 11 extracts the robot processing task, it refers to the inventory layout database and the like to specify a storage case 9 for storing an article to be picked in the robot processing work. When the processor 11 specifies the storage case 9, it causes the CTU 7 to acquire the storage case 9 from the shelf 8 through the high-rise case transfer robot system 30.

When the processor 11 causes the CTU 7 to acquire the storage case 9, it causes the CTU 7 to load the storage case 9 on one end of the conveyor 3a or 3b through the high-rise case transfer robot system 30.

When the CTU 7 loads the storage case 9 on one end of the conveyor 3a or 3b, the conveyor 3a or 3b conveys the storage case 9 to the picking position of the picking robot 111a or 111b. When the conveyor 3a or 3b conveys the storage case 9 to the picking position, the processor 11 causes the picking robot 111a or 111b to pick the article and put it into the dispensing case 6 through the picking robot system 20.

When the picking robot 111a or 111b picks the article and puts it into the dispensing case 6, the conveyor 3a or 3b conveys the storage case 9 to the return position. When the conveyor 3a or 3b conveys the storage case 9 to the return position, the processor 11 causes the CTU 7 to acquire the storage case 9 from the return position through the high-rise case transfer robot system 30. When the processor 11 causes the CTU 7 to acquire the storage case 9, it causes the CTU 7 to return the storage case 9 to the shelf 8 through the high-rise case transfer robot system 30.

Note that if a plurality of robot processing tasks are included in the mixed order, the processor 11 processes each of the robot processing tasks as described above.

In addition, the processor 11 may be one that puts articles of different destinations into the same dispensing case 6. The processor 11 may also be one that puts articles with the same destination into a plurality of dispensing cases 6.

In addition, the picking system may be one that transfers the shelf 8 to the robot station P1 or P2 or the human station P3 or P4 using a shelf transfer robot. In this case, the picking robot 111 and the operator 113 pick articles from the shelf 8.

Furthermore, the processor 11 may create or update the picking availability flag database based on the success or failure of picking by the picking robot 111.

The CTU 7 may convey a plurality of storage cases 9 at the same time.

In the picking system configured as described above, at a robot station, an article is picked using a picking robot and put into a dispensing case. Then, the dispensing case is conveyed to a human station. In the picking system, at the human station, an operator is caused to pick the article and put it into the dispensing case. As a result, the picking system does not need to call an operator to the robot station even if an article pickable by the picking robot and an article to be picked by a person are put into the same tray. Therefore, the picking system makes it possible to pick articles effectively.

The programs according to the present embodiment may be stored in an electronic device and transferred or may not be stored therein but transferred. In the latter case, the programs may be transferred via a network or stored in a storage medium and transferred. The storage medium is a non-transitory tangible medium. The storage medium is a computer readable medium. The storage medium may be any medium such as a CD-ROM and a memory card, the programs of which can be stored and read by a computer, and any form thereof may be used.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An information processing method executed by a processor, comprising:
transferring a storage case which stores an article to a robot station where the article is picked by a robot;
causing the robot to pick the article from the storage case and put the article into a dispensing case;
transferring the dispensing case to a human station where an operator picks the article;
transferring the storage case to the human station; and
causing the operator to pick the article from the storage case and put the article into the dispensing case.

2. The information processing method according to claim 1, further comprising:
acquiring a picking list indicating a plurality of picking operations; and
generating an order configured by a first picking operation in which the robot puts articles in a same dispensing case and a second picking operation in which the operator puts the article,
wherein:
the transferring the storage case to the robot station includes transferring to the robot station the storage case that stores an article of the first picking operation of the order; and
the transferring the storage case to the human station includes transferring to the human station the storage case that stores an article of the second picking operation of the order.

3. The information processing method according to claim 2, further comprising:
acquiring a picking availability flag database indicating whether the article is pickable by the robot; and
determining whether a picking operation is the first picking operation or the second picking operation based on the picking availability flag database.

4. The information processing method according to claim 1, wherein the transferring the storage case to the robot station includes acquiring the storage case from a shelf and transferring the acquired storage case to the robot station.

5. The information processing method according to claim 1, wherein if the robot fails to pick the article, the storage case and the dispensing case are transferred to the human station, and the operator picks the article from the storage case and puts it into the dispensing case.

6. The information processing method according to claim 1, wherein the transferring the dispensing case to a human station includes transferring the storage case to the human station adjacent to the robot station.

7. An information processing method executed by a processor, comprising:
transferring a storage case which stores an article to a human station where the article is picked by an operator;
causing the operator to pick the article from the storage case and put the article into a dispensing case;
transferring the dispensing case to a robot station where a robot picks the article; and
causing the robot to pick the article from the storage case and put the article into the dispensing case.

8. An information processing device comprising:
an interface connected to a robot system which controls a robot to pick an article, a conveyor which conveys a dispensing case from a robot station where the robot picks the article to a human station where an operator picks the article, and a transfer system which controls an automated transfer device which transfers a storage case to store the article to one of the robot station and the human station; and
a processor which:
causes the automated transfer device to transfer the storage case to the robot station through the transfer system;
causes the robot to pick the article from the storage case and put the article into the dispensing case through the robot system;
conveys the dispensing case from the robot station to the human station using the conveyor;
causes the automated transfer device to transfer the storage case to the human station through the transfer system; and
causes the operator to pick the article from the storage case and put the article into the dispensing case.

9. An information processing device comprising:
an interface connected to a robot system which controls a robot to pick an article, a conveyor which conveys a dispensing case from a human station where an operator picks the article to a robot station where the robot picks the article, and a transfer system which controls an automated transfer device which transfers a storage case to store the article to one of the robot station and the human station; and
a processor which:
causes the automated transfer device to transfer the storage case to the human station through the transfer system;
causes the operator to pick the article from the storage case and put the article into the dispensing case;
conveys the dispensing case from the human station to the robot station using the conveyor;
causes the automated transfer device to transfer the storage case to the robot station through the transfer system; and
causes the robot to pick the article from the storage case and put the article into the dispensing case through the robot system.

10. A system including a robot which picks an article, a conveyor which conveys a dispensing case from a robot station where the robot picks the article to a human station where an operator picks the article, an automated transfer device which transfers a storage case to store the article to one of the robot station and the human station, and an information processing device,
wherein the information processing device comprises:
an interface connected to a robot system which controls the robot, the conveyor, and a transfer system which controls the automated transfer device; and
a processor which:
causes the automated transfer device to transfer the storage case to the robot station through the transfer system;
causes the robot to pick the article from the storage case and put the article into the dispensing case through the robot system;
conveys the dispensing case from the robot station to the human station using the conveyor;
causes the automated transfer device to transfer the storage case to the human station through the transfer system; and
causes the operator to pick the article from the storage case and put the article into the dispensing case.

11. A system including a robot which picks an article, a conveyor which conveys a dispensing case from a human station where an operator picks the article to a robot station where the robot picks the article, an automated transfer device which transfers a storage case to store the article to one of the robot station and the human station, and an information processing device,
wherein the information processing device comprises:
an interface connected to a robot system which controls the robot, the conveyor, and a transfer system which controls the automated transfer device; and
a processor which:
causes the automated transfer device to transfer the storage case to the human station through the transfer system;
causes the operator to pick the article from the storage case and put the article into the dispensing case;
conveys the dispensing case from the human station to the robot station using the conveyor;
causes the automated transfer device to transfer the storage case to the robot station through the transfer system; and
causes the robot to pick the article from the storage case and put the article into the dispensing case through the robot system.
